# EUROPÄISCHE PATENTSCHRIFT

(11) **EP 3 612 802 B1**
(45) Veröffentlichungstag und Bekanntmachung des Hinweises auf die Patenterteilung: **25.10.2023**
(21) Anmeldenummer: 18722919.0
(22) Anmeldetag: 19.04.2018
(51) Int. Cl.: G01F 1/66, G01F 15/18

(54) **ULTRASCHALL-DURCHFLUSSMESSEINRICHTUNG**
ULTRASONIC TYPE FLOW MEASURING DEVICE
DÉBITMÈTRE DU TYPE ULTRASONORE

(30) Priorität: 20.04.2017 DE 102017206636
(43) Veröffentlichungstag der Anmeldung: 26.02.2020
(73) Patentinhaber: Siemens Schweiz AG, 8047 Zürich (CH)
(72) Erfinder: HENZMANN, Pascal, 5712 Beinwil am See (CH); SIEGRIST, Thomas, 8700 Küsnacht (CH)
(74) Vertreter: Siemens Patent Attorneys
(86) Internationale Anmeldenummer: PCT/EP2018/060016
(87) Internationale Veröffentlichungsnummer: WO 2018/193030

(56) Entgegenhaltungen:
- EP-A1- 0 152 132
- EP-A1- 0 202 583
- EP-A1- 1 887 328
- DE-U1-202008 014 619
- DE-U1-202009 011 310
- US-A- 3 745 824
- US-A1- 2015 377 666
- US-B1- 6 330 831

## Beschreibung

Die Erfindung betrifft eine Durchflussmesseinrichtung, nämlich eine zur Abgabe eines eine Fließgeschwindigkeit eines durch eine Rohrleitung strömenden Mediums kodierenden Messwerts bestimmte Durchflussmesseinrichtung

Solche Durchflussmesseinrichtungen sind an sich bekannt. An einem Messrohr befinden sich zum Beispiel zwei in axialer Richtung des Messrohrs beabstandete Ultraschallsensoren. Bei einem durch das Messrohr strömenden Medium läuft ein von einem der beiden Ultraschallsensoren in Richtung auf den anderen Ultraschallsensor abgestrahltes Ultraschallsignal zumindest zum Teil in Fließrichtung des Mediums und ein in umgekehrter Richtung abgestrahltes Ultraschallsignal entsprechend zumindest zum Teil gegen die Fließrichtung des Mediums. Durch Ermittlung des Laufzeitunterschieds zwischen dem in Fließrichtung des Mediums laufenden Ultraschallsignal und dem gegen die Fließrichtung des Mediums laufenden Ultraschallsignal kann in an sich bekannter Art und Weise die Fließgeschwindigkeit des Mediums und mit der Fließgeschwindigkeit und dem bekannten Querschnitt des Messrohrs der Volumenstrom durch das Messrohr ermittelt werden.

Ein solches Messrohr ist allerdings unhandlich, verteuert die Durchflussmesseinrichtung und erhöht Transport- und Lagerkosten.

Aus der WO 2010/002432 A1 ist ein Ultraschall-Durchflussmesser bekannt, der in ein Rohr eingeführt wird, durch das ein Fluid bei einem Rohrinnendruck fließt. Der Durchflussmesser beinhaltet eine Signalverarbeitungseinheit und einen rohrförmigen Messkörper, der dem Rohrinnendruck unterliegt und im Wesentlichen frei von Druckdifferenzen von der Innenzur Außenseite des Rohres ist. Das Rohr weist eine Bohrung auf, durch die das Fluid fließt. Der Durchflussmesser umfasst weiter einen stromaufwärts und stromabwärts gegenüberliegenden akustischen Wandler, der in dem Messkörper angeordnet ist, der einem Rohrinnendruck unterliegt und der frei von jeglicher Druckdifferenz von der Innen- zur Außenseite des Rohres ist und mindestens einen akustischen Pfad über den Strömungsfluss bildet und in Verbindung mit der Signalverarbeitungseinheit steht. Schließlich umfasst der Durchflussmesser einen Mechanismus zur Montage des Zählerkörpers in dem Rohr, der einer Druckdifferenz von der Innen- zur Außenseite des Rohres unterliegt.

Aus der Aus der CN204718761U ist eine Sensoranordnung bekannt, bei der ein Durchflusssensor mittels einer Dichtung an eine Rohrleitung gekoppelt ist, nämlich an einer Verbindungsstelle von zwei Rohrleitungselementen der Rohrleitung. In der Dichtung ist ein Loch, an welches eine zu dem Sensor führende Leitung anschließt. Mittels des Sensors soll ein eventuelles Leck erkannt werden. Der Sensor ist nicht zur Bestimmung einer Strömungsgeschwindigkeit des in der Rohrleitung strömenden Mediums geeignet.

Die DE 1 915 324 A1 beschreibt einen magnetisch induktiven Strömungssensor, welcher in einen Abschnitt einer Rohrleitung eingesetzt wird. Der Strömungssensor hat die Form eines Hohlzylinders und liegt an der Innenwand der Rohrleitung an. Im Innern des Hohlzylinders befinden sich Leiter oder Spulenwindungen, die sich in Längsrichtung des Hohlzylinders erstrecken. Die Fixierung des Strömungssensors in der Rohrleitung erfolgt mittels eines angeformten und nach außen gerichteten Flansches, der an einer Verbindungsstelle von zwei Rohrleitungselementen der Rohrleitung zwischen zwei dort einander zugewandten Flanschen der Rohrleitungselemente festgeklemmt wird.

Aus der DE 20 2009 011310 U1, EP 0 202 583 A1, EP 1 887 328 A1, EP 0 152 132 A1, DE 20 2008 014619 U1 und US 6 330 831 B1 sind Ultraschall-Durchflussmesseinrichtungen mit in eine Rohrleitung einsetzbaren Messrohren bekannt.

Aus der US 6 330 831 B1, US 2015/377666 A1 und US 3 745 824 A sind weitere flanschartige, ringförmige Trägerteile für magnetisch-induktive Durchflusssensoren bekannt.

Eine Aufgabe der Erfindung besteht darin, eine Durchflussmesseinrichtung der eingangs genannten Art anzugeben, die kein Messrohr benötigt und trotzdem einfach zu verwenden ist.

Diese Aufgabe wird erfindungsgemäß mittels einer Durchflussmesseinrichtung mit den Merkmalen des Anspruchs 1 gelöst.

Demnach ist bei einer Durchflussmesseinrichtung mit zumindest zwei beabstandet voneinander angeordneten Sensoren vorgesehen, dass die Durchflussmesseinrichtung mittels eines flanschartigen, ringförmigen Trägerteils zwischen zwei Rohrsegmenten einer Rohrleitung platzierbar ist. Das flanschartige, ringförmige Trägerteil ist zur Anbringung an einer Flanschfläche eines Rohrabschnitts der Rohrleitung bestimmt bzw. ausgebildet. Die Sensoren befinden sich jeweils an einem freien Ende eines von dem flanschartigen, ringförmigen Trägerteil ausgehenden Fortsatzes. Die Fortsätze sind senkrecht oder zumindest im Wesentlichen senkrecht zu einer durch das flanschartige, ringförmige Trägerteil definierten Ebene ausgerichtet, wobei die Flächennormale dieser Ebene parallel zu einer Rohrachse eines Rohrsegments verläuft. Jeweils zwei Sensoren definieren einen Signalweg und der Signalweg umfasst eine Komponente senkrecht zu der durch das flanschartige, ringförmige Trägerteil definierten Ebene.

Die Durchflussmesseinrichtung ist dafür bestimmt, mit ihrem Trägerteil wie eine Dichtung zwischen den Enden zweier hier und im Folgenden zusammenfassend als Rohrsegmente bezeichneter Rohr- oder Schlauchsegmente angebracht zu werden. Im angebrachten Zustand ragen die Fortsätze in zumindest eines der Rohrsegmente hinein. Bei ausgehend von dem Trägerteil in dieselbe Richtung weisenden Fortsätzen ragen diese in eines der Rohrsegmente. Bei ausgehend von dem Trägerteil in unterschiedliche Richtungen weisenden Fortsätzen ragt zumindest ein Fortsatz in eines der Rohrsegmente und zumindest ein anderer Fortsatz in das andere Rohrsegment. Aufgrund der Richtung und/oder Länge der Fortsätze ist gewährleistet, dass ein Signalweg zwischen den beiden Sensoren oder jeweils zwei Sensoren eine Komponente senkrecht zu der durch das Trägerteil definierten Ebene umfasst. Diese Komponente verläuft parallel zur Strömungsrichtung eines durch das jeweilige Rohrsegment fließenden Mediums. Damit kann durch die oben beschriebene Betrachtung von Laufzeitunterschieden von Schallsignalen, insbesondere Ultraschallsignalen, die Fließgeschwindigkeit des Mediums bestimmt werden.

Der Vorteil der Erfindung besteht darin, dass die Durchflussmesseinrichtung kein Messrohr benötigt und umfasst. Bei der Montage der Durchflussmesseinrichtung werden deren Fortsätze in das Rohrsegment eingeführt, an dem das Trägerteil angebracht wird. Die Durchflussmesseinrichtung ist damit kleiner und leichter als bekannte, ein Messrohr umfassende Durchflussmesseinrichtungen. Das Trägerteil hat eine Dicke, die größenordnungsmäßig einer Dicke einer Dichtung entspricht. Die Durchflussmesseinrichtung kann also leicht in ein bestehendes Rohrleitungs- oder Schlauchsystem eingesetzt werden, ohne dass dafür die Längen vorhandener Leitungen angepasst werden müssen.

Vorteilhafte Ausgestaltungen der hier vorgeschlagenen Durchflussmesseinrichtung sind Gegenstand der Unteransprüche. Dabei verwendete Rückbeziehungen innerhalb der Ansprüche weisen auf die weitere Ausbildung des Gegenstandes des in Bezug genommenen Anspruchs durch die Merkmale des jeweiligen abhängigen Anspruchs hin. Sie sind nicht als ein Verzicht auf die Erzielung eines selbständigen, gegenständlichen Schutzes für die Merkmale oder Merkmalskombinationen eines abhängigen Anspruchs zu verstehen. Des Weiteren ist im Hinblick auf eine Auslegung der Ansprüche sowie der Beschreibung bei einer näheren Konkretisierung eines Merkmals in einem abhängigen Anspruch davon auszugehen, dass eine derartige Beschränkung in den jeweils vorangehenden Ansprüchen sowie einer allgemeineren Ausführungsform der gegenständlichen Durchflussmesseinrichtung nicht vorhanden ist. Jede Bezugnahme in der Beschreibung auf Aspekte abhängiger Ansprüche ist demnach auch ohne speziellen Hinweis ausdrücklich als Beschreibung optionaler Merkmale zu lesen.

Bei einer Ausführungsform der Durchflussmesseinrichtung weist bei genau zwei Sensoren und entsprechend zwei Fortsätzen jeder Fortsatz ausgehend von dem flanschartigen, ringförmigen Trägerteil in eine andere Richtung, wobei die beiden Richtungen im Wesentlichen antiparallel zueinander sind, während bei zwei ausgehend vom flanschartigen, ringförmigen Trägerteil in dieselbe Richtung weisenden Fortsätzen die Fortsätze unterschiedlich lang sind, wobei die beiden Richtungen im Wesentlichen parallel zueinander sind.

Bei genau vier Sensoren und entsprechend vier Fortsätzen bilden jeweils zwei Sensoren ein Sensorpaar und die diese tragenden Fortsätze ein Fortsatzpaar. Dann weist in jedem Fortsatzpaar entweder jeder Fortsatz ausgehend von dem flanschartigen, ringförmigen Trägerteil in eine andere Richtung, wobei die beiden Richtungen im Wesentlichen antiparallel zueinander sind, oder die Fortsätze sind bei in dieselbe Richtung weisenden Fortsätzen unterschiedlich lang, wobei die beiden Richtungen im Wesentlichen parallel zueinander sind. Bei allen diesen Ausführungsformen ist gewährleistet, dass der Signalweg zwischen zwei Sensoren oder jeweils zwei Sensoren eine Komponente senkrecht zu der durch das Trägerteil definierten Ebene umfasst, so dass - wie oben beschrieben - eine Ermittlung von Laufzeitdifferenzen möglich ist.

Bei einer besonderen Ausführungsform der Durchflussmesseinrichtung sind die Fortsätze einstückig an das flanschartige, ringförmige Trägerteil angeformt. Das Trägerteil ist dann zum Beispiel aus einem Kunststoff gefertigt und kann in einem Arbeitsgang hergestellt werden.

Bei einer weiteren besonderen Ausführungsform der Durchflussmesseinrichtung ist jeder Sensor am Ende des jeweiligen Fortsatzes in das Material des Fortsatzes eingebettet. Der Sensor ist dort gegen Beschädigungen beim Transport der Durchflussmesseinrichtung sowie gegen Beschädigungen durch das jeweilige Medium geschützt.

Bei einer nochmals weiteren Ausführungsform weist die Durchflussmesseinrichtung als Sensoren am Ende der Fortsätze Ultraschallsensoren auf. Dann fungiert die Durchflussmesseinrichtung als Ultraschall- Durchflussmesseinrichtung.

Nachfolgend wird ein Ausführungsbeispiel der Erfindung anhand der Zeichnung näher erläutert. Einander entsprechende Gegenstände oder Elemente sind in allen Figuren mit den gleichen Bezugszeichen versehen.

Das oder jedes Ausführungsbeispiel ist nicht als Einschränkung der Erfindung zu verstehen. Vielmehr sind im Rahmen der vorliegenden Offenbarung durchaus auch Ergänzungen und Modifikationen möglich, insbesondere solche, die zum Beispiel durch Kombination oder Abwandlung von einzelnen in Verbindung mit den im allgemeinen oder speziellen Beschreibungsteil beschriebenen sowie in den Ansprüchen und/oder der Zeichnung enthaltenen Merkmalen für den Fachmann im Hinblick auf die Lösung der Aufgabe entnehmbar sind und durch kombinierbare Merkmale zu einem neuen Gegenstand oder zu neuen Verfahrensschritten führen.

Es zeigen
- FIG 1, FIG 2: und
- FIG 3: eine Veranschaulichung des Grundprinzips der Messung einer Strömungsgeschwindigkeit eines durch eine Rohrleitung strömenden Mediums mit Ultraschall,
- FIG 4: eine Ausführungsform einer hier vorgeschlagenen Durchflussmesseinrichtung und
- FIG 5: eine weitere Ausführungsform einer hier vorgeschlagenen Durchflussmesseinrichtung.

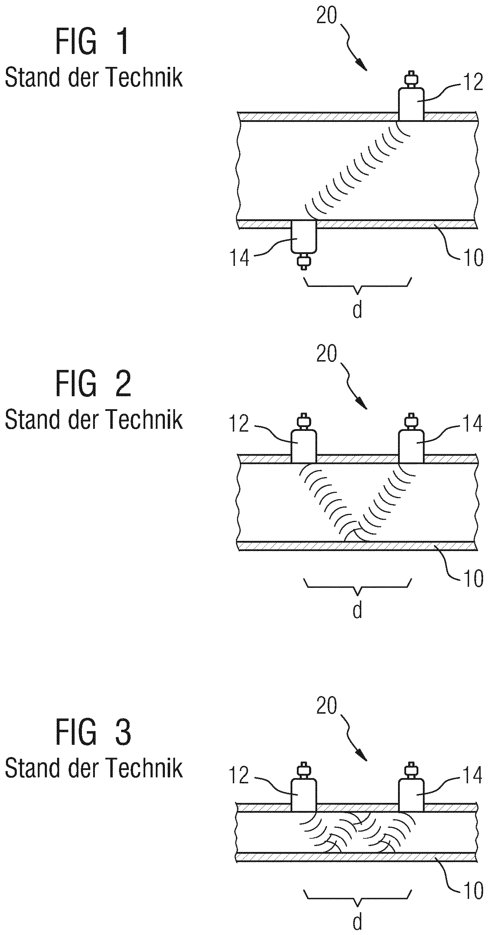

Die Messung einer Strömungsgeschwindigkeit eines Mediums in einer Rohrleitung 10 mittels Ultraschall ist an sich bekannt. Die Darstellungen in FIG 1, FIG 2 und FIG 3 zeigen schematisch vereinfacht unterschiedliche Konfigurationen. Danach ist einer Rohrleitung 10, durch welches ein Medium strömt, dessen Strömungsgeschwindigkeit ermittelt werden soll, ein Sensorpaar zugeordnet. Das Sensorpaar umfasst einen ersten Ultraschallsensor 12 und einen zweiten Ultraschallsensor 14. Beide im Folgenden mitunter auch nur kurz einzeln als Sensor 12, 14 und zusammen als Sensoren 12, 14 bezeichnete Ultraschallsensoren 12, 14 arbeiten als Ultraschallsender und als Ultraschallempfänger. Die Sensoren 12, 14 sind in Fließrichtung des durch die Rohrleitung 10 strömenden Mediums, also in axialer Richtung der Rohrleitung 10, beabstandet voneinander angeordnet.

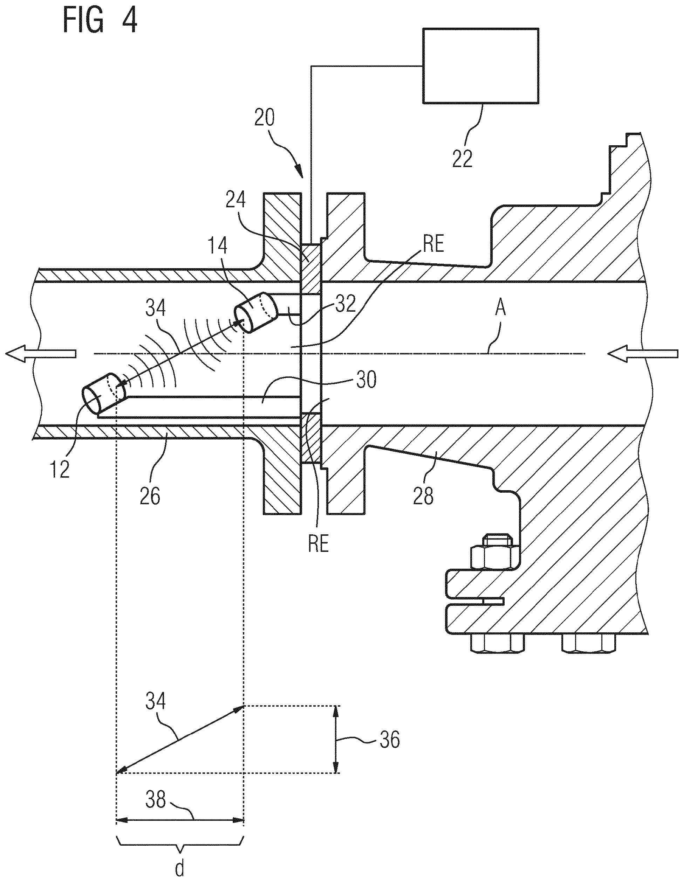

Die beiden Sensoren 12, 14 fungieren zusammen als Durchflussmesseinrichtung 20. Sensorsignale der Sensoren 12, 14 werden mittels einer zu der Durchflussmesseinrichtung 20 gehörenden Auswerteeinrichtung 22 (in FIG 1 bis FIG 3 nicht gezeigt; siehe FIG 4) zum Erhalt eines Messwerts für die Strömungsgeschwindigkeit oder eines Volumenstroms des jeweiligen Mediums ausgewertet.

Die Sensoren 12, 14 der Durchflussmesseinrichtung 20 sind oftmals in die Wandung eines Abschnitts der Rohrleitung 10 integriert oder durchdringen die Rohrwandung eines solchen Abschnitts. Der Rohrleitungsabschnitt gehört dann ebenfalls zur Durchflussmesseinrichtung 20 und wird üblicherweise als Messrohr bezeichnet. Ein solches Messrohr weist beidseitig jeweils einen Flansch auf und zur Anbringung einer Durchflussmesseinrichtung 20 wird dessen Messrohr in die jeweilige Rohrleitung 10 eingesetzt. Bei einer Ausführungsform einer Durchflussmesseinrichtung 20 ohne Messrohr sind die Sensoren 12, 14 einzeln auf der Außenoberfläche der Rohrleitung 10 aufgesetzt.

Beide Sensoren 12, 14 fungieren entweder als Sender oder als Empfänger von Ultraschallsignalen. Dafür umfasst jeder Sensor 12, 14 zum Beispiel in grundsätzlich an sich bekannter Art und Weise einen piezoelektrischen Kristall. Mittels einer aktiven Anregung des piezoelektrischen Kristalls erzeugt der jeweilige Sensor 12, 14 Ultraschallsignale, welche der andere Sensor 12, 14 aufgrund der passiven Anregung von dessen piezoelektrischem Kristall empfängt.

Zur Ermittlung der Strömungsgeschwindigkeit des jeweiligen Mediums werden in an sich bekannter Art und Weise Laufzeitunterschiede von Ultraschallsignalen, die von einem der Sensoren 12, 14 (erster Sensor 12) zum jeweils anderen Sensor 12, 14 (zweiter Sensor 14) gesandt werden, ausgewertet. Konkret wird der Laufzeitunterschied zwischen einem mit der Fließrichtung des Mediums vom ersten Sensor 12 zum zweiten Sensor 14 ausgesandten Ultraschallsignal sowie einem gegen die Fließrichtung des Mediums vom zweiten Sensor 14 zum ersten Sensor 12 ausgesandten Ultraschallsignal betrachtet. Je höher die Strömungsgeschwindigkeit ist, desto höher ist die Laufzeit des gegen die Fließrichtung des Mediums ausgesandten Ultraschallsignals und umso geringer ist die Laufzeit des mit der Fließrichtung des Mediums ausgesandten Ultraschallsignals.

Zur Messung solcher Laufzeitunterschiede ist eine Messstrecke erforderlich, also ein Abstand zwischen den zumindest zwei Sensoren 12, 14. Die aus dem jeweiligen Abstand der Sensoren 12, 14 resultierende Messstrecke ist in der Darstellungen in FIG 1 bis FIG 3 für die verschiedenen dort gezeigten Konfigurationen mit d bezeichnet. Eine solche Messstrecke macht eine Durchflussmesseinrichtung 20 mit einem Messrohr aufgrund des Platzbedarfs vor allem unhandlich. Bei einer Durchflussmesseinrichtung 20 ohne Messrohr muss jeder Sensor 12, 14 einzeln platziert, der jeweilige Abstand sehr exakt ausgemessen und die Auswerteeinrichtung 22 entsprechend dem gemessenen Abstand parametriert werden.

Die Darstellung in FIG 4 zeigt eine Ausführungsform der hier vorgeschlagenen Durchflussmesseinrichtung 20. Diese ist mittels eines flanschartigen, ringförmigen Trägerteils 24 zwischen zwei Rohrsegmenten 26, 28 einer Rohrleitung 10 platzierbar und in der dargestellten Konfiguration in dieser Form platziert. Mit RE ist das jeweilige Rohrende bzw. Rohrsegmentende bezeichnet. Mit dem Bezugszeichen A ist eine Rohrachse bzw. Rohrleitungsachse bezeichnet. Sie kann auch als Symmetrieachse eines Rohrs bzw. Rohrsegments 26, 28 betrachtet werden, welches typischerweise rotationssymmetrisch ist. Von dem Trägerteil 24 gehen senkrecht zu einer durch das Trägerteil 24 definierten Ebene zumindest zwei fingerartige Fortsätze 30, 32 ab. Die Flächennormale dieser so definierten Ebene verläuft typischerweise parallel zur Rohrachse A. Die Fortsätze 30, 32 reichen in eines der Rohrsegmente 26, 28 hinein und zwar entweder jeder Fortsatz 30, 32 in eines der Rohrsegmente 26, 28 oder beide Fortsätze 30, 32 in dasselbe Rohrsegment 26, 28. Am freien Ende jedes Fortsatzes 30, 32 befindet sich ein Sensor 12, 14, insbesondere ein Ultraschallsensor 12, 14.

Der für die Funktion der Durchflussmesseinrichtung 20 notwendige Abstand zwischen den Sensoren 12, 14 ergibt sich, indem die fingerartigen Fortsätze 30, 32 entweder in unterschiedliche Richtungen weisen oder bei in dieselbe Richtung weisenden Fortsätzen 30, 32 unterschiedlich lang sind. Zur Konkretisierung der Ausdrücke "unterschiedliche Richtungen" und "dieselbe Richtung" gilt Folgendes: Bei zwei in dieselbe Richtung weisenden Fortsätzen 30, 32 sind zwei jeweils vom Trägerteil 24 bis zum Sensor 12, 14 am Ende des Fortsatzes 30, 32 verlaufende gedachte Vektoren parallel oder zumindest im Wesentlichen parallel zueinander und schließen jedenfalls nur einen kleinen Winkel (< 10°) ein. Bei zwei in unterschiedliche Richtungen weisenden Fortsätzen 30, 32 sind zwei jeweils vom Trägerteil 24 bis zum Sensor 12, 14 am Ende des Fortsatzes 30, 32 verlaufende gedachte Vektoren antiparallel oder zumindest im Wesentlichen antiparallel zueinander und schließen jedenfalls nur einen kleinen Winkel (< 10°) ein. Eine nicht exakt parallele oder antiparallele Ausrichtung der Fortsätze 30, 32 kann sinnvoll sein, wenn einer der Fortsätze 30, 32 oder beide Fortsätze 30, 32 in ein nicht gerades Rohrsegment 26, 28 ragen sollen.

Indem die Fortsätze 30, 32 unterschiedlich lang sind und/oder in unterschiedliche Richtungen weisen, ergibt sich der für die Laufzeitmessung notwendige Abstand zwischen den im Folgenden einzeln zur Unterscheidung als erster Sensor 12 und zweiter Sensor 14 bezeichneten Sensoren 12, 14. Die hier vorgeschlagene Durchflussmesseinrichtung 20 benötigt einerseits kein Messrohr und andererseits keine aufwändige Parametrierung, weil ein jeweiliger Abstand zwischen den Sensoren 12, 14 bekannt ist.

In der Darstellung in FIG 4 ist eine Ausführungsform der Durchflussmesseinrichtung 20 mit zwei in dieselbe Richtung weisenden und unterschiedlich langen, senkrecht oder zumindest im Wesentlich senkrecht zu der durch das Trägerteil 24 definierten Ebene ausgerichteten Fortsätzen 30, 32 gezeigt. Bei den Sensoren 12, 14 der Durchflussmesseinrichtung 20 handelt es sich bevorzugt um Ultraschallsensoren und auf Basis einer solchen Ausführungsform - allerdings ohne Verzicht auf eine weitergehende Allgemeingültigkeit - wird die nachfolgende Beschreibung fortgesetzt. Dennoch ist bei jeder Erwähnung eines Ultraschallsensors 12, 14 auch ein Sensor, der in einem anderen Frequenzbereich als Ultraschall arbeitet, mitzulesen.

Die Position der Sensoren 12, 14 am Ende der Fortsätze 30, 32 definiert einen Signalweg 34. Dieser ist unterhalb der Darstellung der Durchflussmesseinrichtung 20 nochmals separat dargestellt. Daraus ergibt sich, dass der Signalweg 34 eine Komponente 36 parallel zur Ebene des Trägerteils 24 (parallele Komponente 36) und eine Komponente 38 senkrecht zur Ebene des Trägerteils 24 (senkrechte Komponente 38) umfasst. Wesentlich ist die Komponente 38 senkrecht zu der durch das Trägerteil 24 definierten Ebene. Bei einer an einem Rohrsegment 26, 28 angebrachten Durchflussmesseinrichtung 20 der hier vorgeschlagenen Art weist diese Komponente 38 in Flussrichtung eines durch das Rohrsegment 26, 28 strömenden Mediums. Diese Komponente 38 definiert also die bei der Beschreibung der Darstellungen in FIG 1 bis FIG 3 erwähnte Messstrecke d und entsprechend ist die Messstrecke d auch in FIG 4 eingezeichnet.

Bei einer nicht gezeigten Ausführungsform der Durchflussmesseinrichtung 20 mit vom Trägerteil 24 ausgehend in unterschiedliche Richtungen weisenden Fortsätzen 30, 32 ist evident, dass sich aufgrund des dann resultierenden Signalwegs 34 ebenfalls eine eine Messtrecke d bestimmende Komponente 38 quer zur Ebene des Trägerteils 24 und in Fließrichtung des jeweiligen Mediums ergibt.

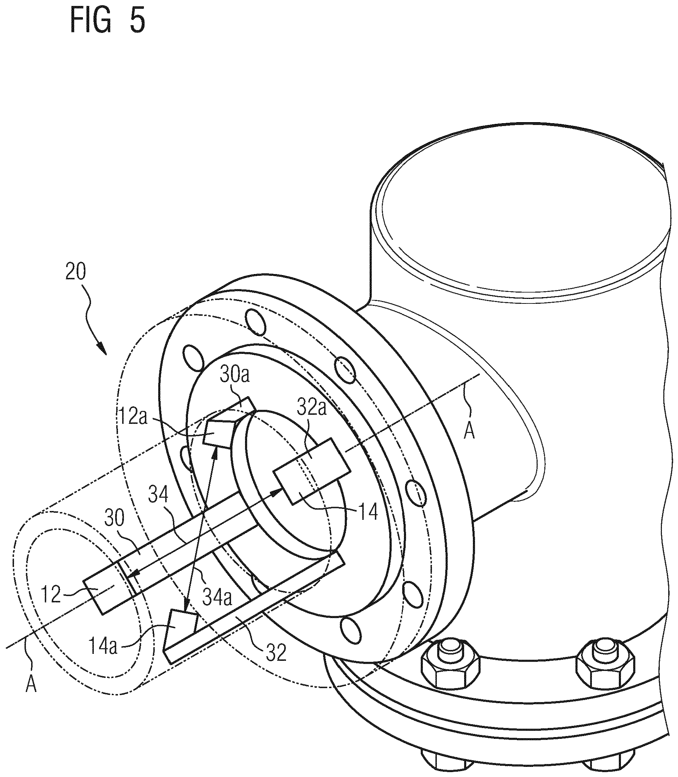

Die Darstellung in FIG 5 zeigt eine besondere Ausführungsform der Durchflussmesseinrichtung 20 gemäß FIG 4. Auch diese Durchflussmesseinrichtung 20 benötigt kein Messrohr und keine aufwändige Parametrierung. Im Gegensatz zu der Durchflussmesseinrichtung 20 gemäß FIG 4, welche zwei Fortsätze 30, 32, also ein Paar Fortsätze 30, 32, umfasst, umfasst die Durchflussmesseinrichtung 20 gemäß FIG 5 zwei Paar Fortsätze 30, 32; 30a, 32a. Am Ende jedes Fortsatzes 30, 32; 30a, 32a befindet sich jeweils ein Sensor 12, 14. Die Durchflussmesseinrichtung 20 gemäß FIG 5 weist also neben zwei Paar Fortsätzen 30, 32; 30a, 32a auch zwei paarig zusammengehörige Sensoren 12, 14; 12a, 14a auf. Der Verlauf der Ultraschallwellen zwischen den Sensoren 12, 14; 12a, 14a ist jeweils mit Doppelpfeilen veranschaulicht (erster Signalweg 34; zweiter Signalweg 34a) .

Bei in dieselbe Richtung weisenden Fortsätzen 30, 32; 30a, 32a gehen die Ultraschallwellen zumindest zu einem bestimmten Zeitpunkt bei einem der beiden Sensorpaare von dem am Ende des langen Fortsatzes 30 befindlichen ersten Sensor 12 aus und werden von dem am Ende des zugehörigen kurzen Fortsatzes 32 befindlichen zweiten Sensor 14 empfangen. Bei dem anderen Sensorpaar gehen die Ultraschallwellen entsprechend von dem am Ende des kurzen Fortsatzes 32a befindlichen zweiten Sensor 14a aus und werden von dem am Ende des zugehörigen langen Fortsatzes 30a befindlichen ersten Sensor 12a empfangen. Bei in unterschiedliche Richtungen weisenden Fortsätzen 30, 32; 30a, 32a gilt dies entsprechend. An die Stelle der langen und kurzen Fortsätze 30, 32; 30a, 32a tritt jeweils ein in dieselbe Richtung weisendes Fortsatzpaar 30, 32; 30a, 32a. Die beiden Fortsatzpaare 30, 32; 30a, 32a weisen in entgegengesetzte Richtungen.

Der Vorteil der Ausführungsform gemäß FIG 5 besteht darin, dass gleichzeitig mittels eines Sensorpaars 12, 14 Ultraschallwellen mit der Strömungsrichtung des jeweiligen Mediums und mittels des anderen Sensorpaars 12a, 14a Ultraschallwellen gegen die Strömungsrichtung des Mediums ausgesandt werden. Bei der Ausführungsform gemäß FIG 4 mit nur einem Sensorpaar 12, 14 werden alternierend zunächst vom ersten Sensor 12 Ultraschallwellen ausgesandt, die dann von dem zweiten Sensor 14 empfangen werden und anschließend Ultraschallwellen von dem zuvor empfangenden zweiten Sensor 14 ausgesandt, welche dann von dem zuvor sendenden ersten Sensor 12 empfangen werden. Auch dann werden die jeweils erzeugten Ultraschallwellen einmal mit der Strömungsrichtung des strömenden Mediums und einmal gegen die Strömungsrichtung des strömenden Mediums ausgesandt. Bei einer Durchflussmesseinrichtung 20 mit nur einem Sensorpaar 12, 14 (FIG 4) muss für den Erhalt eines Strömungsmesswerts ein vollständiger Zyklus (Senden mit dem ersten Sensor 12, Empfangen mit dem zweiten Sensor 14; Senden mit dem zweiten Sensor 14, Empfangen mit dem ersten Sensor 12) abgewartet werden. Bei einer Durchflussmesseinrichtung 20 mit zwei jeweils paarig zusammengehörigen Sensoren 12, 14; 12a, 14a kann der Strömungsmesswert bereits ermittelt werden, sobald die beiden als Empfänger fungierenden Sensoren 12, 14; 12a, 14a die jeweils ausgesandten Ultraschallwellen empfangen.

Auch bei der Ausführungsform gemäß FIG 5 ist eine Richtung der jeweils ausgesandten Ultraschallwellen nicht notwendig dauerhaft konstant. Indem auch bei einer Ausführungsform mit zwei Sensorpaaren 12, 14; 12a, 14a die Richtung der jeweils ausgesandten Ultraschallwellen mit einer vorgegebenen oder vorgebbaren Periodizität wechselt, können Messfehler aufgrund von Turbulenzen in dem strömenden Medium oder dergleichen vermieden oder zumindest reduziert werden.

Denkbar ist auch eine Durchflussmesseinrichtung 20 mit zumindest einem Sensor 12, 14, welcher gleichzeitig oder alternierend in zwei Richtungen strahlt und aus zwei Richtungen empfängt, so dass anstelle von zwei Sensorpaaren mit insgesamt vier Sensoren 12, 14; 12a, 14a auch eine Durchflussmesseinrichtung 20 mit drei Sensoren, darunter ein derartiger Sensor, aufgebaut werden kann. Ein solcher Sensor stellt aber letztlich nur eine Kombination zweier jeweils in eine Richtung strahlender und aus dieser Richtung empfangender Sensoren dar, so dass auch ein solcher Sensor so aufgefasst wird, als befinden sich an dieser Stelle zwei einzelne Sensoren 12, 14; 12a, 14a.

Obwohl die Erfindung im Detail durch das Ausführungsbeispiel näher illustriert und beschrieben wurde, so ist die Erfindung nicht durch das oder die offenbarten Beispiele eingeschränkt und andere Variationen können vom Fachmann hieraus abgeleitet werden, ohne den Schutzumfang der Erfindung zu verlassen.

Einzelne im Vordergrund stehende Aspekte der hier eingereichten Beschreibung lassen sich damit kurz wie folgt zusammenfassen: Die hier vorgestellte Neuerung ist eine Durchflussmesseinrichtung 20 mit zumindest zwei beabstandet voneinander angeordneten Sensoren 12, 14; 12a, 14a, die kein ansonsten oftmals notwendiges Messrohr umfasst. Die Sensoren 12, 14; 12a, 14a der Durchflussmesseinrichtung 20 befinden sich jeweils an einem freien Ende eines von einem ringförmigen, zur Anbringung an einer Flanschfläche eines Rohrabschnitts bestimmten Trägerteil 24 ausgehenden Fortsatzes 30, 32; 30a, 32. Bei den Sensoren 12, 14; 12a, 14a handelt es sich bevorzugt um Ultraschallsensoren 12, 14; 12a, 14a. Die Fortsätze 30, 32; 30a, 32a sind senkrecht oder zumindest im Wesentlich senkrecht zu einer durch das Trägerteil 24 definierten Ebene ausgerichtet. Jeweils zwei Sensoren 12, 14; 12a, 14a - erster Sensor 12, 12a, zweiter Sensor 14, 14a - definieren einen Signalweg 34, 34a für ein vom ersten Sensor 12, 12a ausgesandtes und vom zweiten Sensor 14, 14a empfangenes Signal (oder umgekehrt), insbesondere Ultraschallsignal. Der Signalweg 34, 34a umfasst eine Komponente 38 senkrecht zu der durch das Trägerteil 24 definierten Ebene. Im an einem Rohrsegment 26, 28 angebrachten Zustand ist diese Komponente 38 parallel zur Fließrichtung eines durch das Rohrsegment 26, 28 strömenden Mediums, so dass mittels der Durchflussmesseinrichtung 20 Laufzeitunterschiede eines mittels der zumindest zwei Sensoren 12, 14; 12a, 14a gegen die Fließrichtung und mit der Fließrichtung ausgesandten Signals zur Bestimmung einer Strömungsgeschwindigkeit des Mediums ermittelt werden können.

### Bezugszeichenliste

- 10: Rohrleitung
- 12, 12a: Sensor
- 14, 14a: Sensor
- 20: Durchflussmesseinrichtung
- 22: Auswerteeinrichtung
- 24: Trägerteil
- 26: Rohrsegment
- 28: Rohrsegment
- 30, 30a: Fortsatz
- 32, 32a: Fortsatz
- 34, 34a: Signalweg
- 36: parallele Komponente
- 38: senkrechte Komponente
- A: Rohrachse, Rohrleitungsachse, Symmetrieachse
- d: Messstrecke
- RE: Rohrende

## Patentansprüche

1. Durchflussmesseinrichtung (20) mit einem flanschartigen, ringförmigen Trägerteil (24) und mit zumindest zwei beabstandet voneinander angeordneten Sensoren (12, 14; 12a, 14a), wobei die Durchflussmesseinrichtung (20) mittels des flanschartigen, ringförmigen Trägerteils (24) zwischen zwei Rohrsegmenten (26, 28) einer Rohrleitung (10) platzierbar ist, wobei das flanschartige, ringförmige Trägerteil (24) zur Anbringung an einer Flanschfläche eines Rohrabschnitts der Rohrleitung (10) bestimmt ist,
- wobei sich die Sensoren (12, 14; 12a, 14a) jeweils an einem freien Ende eines von dem flanschartigen, ringförmigen Trägerteil (24) ausgehenden Fortsatzes (30, 32; 30a, 32a) befinden,
- wobei die Fortsätze (30, 32; 30a, 32a) senkrecht oder zumindest im Wesentlich senkrecht zu einer durch das flanschartige, ringförmige Trägerteil (24) definierten Ebene ausgerichtet sind, wobei die Flächennormale dieser Ebene parallel zu einer Rohrachse (A) eines Rohrsegments (26, 28) verläuft, und
- wobei jeweils zwei Sensoren (12, 14; 12a, 14a) einen Signalweg (34, 34a) definieren und der Signalweg (34, 34a) eine Komponente (38) senkrecht zu der durch das flanschartige, ringförmige Trägerteil (24) definierten Ebene umfasst.

2. Durchflussmesseinrichtung (20) nach Anspruch 1,
- wobei bei genau zwei Sensoren (12, 14; 12a, 14a) und entsprechend zwei Fortsätzen (30, 32; 30a, 32a) jeder Fortsatz (30, 32; 30a, 32a) ausgehend von dem flanschartigen, ringförmigen Trägerteil (24) in eine andere Richtung weist, wobei die beiden Richtungen im Wesentlichen antiparallel zueinander sind, oder
- wobei bei zwei ausgehend vom flanschartigen, ringförmigen Trägerteil (24) in dieselbe Richtung weisenden Fortsätzen (30, 32; 30a, 32a) die Fortsätze (30, 32; 30a, 32a) unterschiedlich lang sind, wobei die beiden Richtungen im Wesentlichen parallel zueinander sind.

3. Durchflussmesseinrichtung (20) nach Anspruch 1,
- wobei bei genau vier Sensoren (12, 14; 12a, 14a) und entsprechend vier Fortsätzen (30, 32; 30a, 32a) jeweils zwei Sensoren (12, 14; 12a, 14a) ein Sensorpaar und die diese tragenden Fortsätze (30, 32; 30a, 32a) ein Fortsatzpaar bilden, und
- wobei in jedem Fortsatzpaar entweder jeder Fortsatz (30, 32; 30a, 32a) ausgehend von dem flanschartigen, ringförmigen Trägerteil (24) in eine andere Richtung weist, wobei die beiden Richtungen im Wesentlichen antiparallel zueinander sind, oder bei in dieselbe Richtung weisenden Fortsätzen (30, 32; 30a, 32a) die Fortsätze (30, 32; 30a, 32a) unterschiedlich lang sind, wobei die beiden Richtungen im Wesentlichen parallel zueinander sind.

4. Durchflussmesseinrichtung (20) nach einem der vorangehenden Ansprüche, wobei die Fortsätze (30, 32; 30a, 32a) einstückig mit dem flanschartigen, ringförmigen Trägerteil (24) verbunden sind.

5. Durchflussmesseinrichtung (20) nach einem der vorangegangenen Ansprüche, wobei jeder Sensor (12, 14; 12a, 14a) am Ende des jeweiligen Fortsatzes (30, 32; 30a, 32a) in das Material des Fortsatzes (30, 32; 30a, 32a) eingebettet ist.

6. Durchflussmesseinrichtung (20) nach einem der vorangehenden Ansprüche, mit Ultraschallsensoren (12, 14; 12a, 14a) am Ende der Fortsätze (30, 32; 30a, 32a).

## Claims

1. Flow meter (20) having a flange-type, ring-shaped carrier part (24) and having at least two sensors arranged at a distance from one another (12, 14; 12a, 14a), wherein the flow meter (20) can be placed between two tube segments (26, 28) of a conduit (10) by means of the flange-type, ring-shaped carrier part (24), wherein the flange-type, ring-shaped carrier part (24) is intended to be mounted on a flange face of a tube section of the conduit (10),
- wherein the sensors (12, 14; 12a, 14a) are located in each case at a free end of an extension (30, 32; 30a, 32a) extending from the flange-type, ring-shaped carrier part (24),
- wherein the extensions (30, 32; 30a, 32a) are aligned perpendicularly or at least substantially perpendicularly to a plane defined by the flange-type, ring-shaped carrier part (24), wherein the surface normal of this plane runs parallel to a tube axis (A) of a tube segment (26, 28), and
- wherein two sensors (12, 14; 12a, 14a) in each case define a signal path (34, 34a) and the signal path (34, 34a) comprises a component (38) perpendicular to the plane defined by the flange-type, ring-shaped carrier part (24).

2. Flow meter (20) according to claim 1,
- wherein in the case of exactly two sensors (12, 14; 12a, 14a) and correspondingly two extensions (30, 32; 30a, 32a), each extension (30, 32; 30a, 32a) points in a different direction starting from the flange-type, ring-shaped carrier part (24), wherein the two directions are essentially antiparallel to one another, or
- wherein in the case of two extensions (30, 32; 30a, 32a) which point in the same direction starting from the flange-type, ring-shaped carrier part (24), the extensions (30, 32; 30a, 32a) are of different lengths, wherein the two directions are essentially parallel to one another.

3. Flow meter (20) according to claim 1,
- wherein in the case of exactly four sensors (12, 14; 12a, 14a) and correspondingly four extensions (30, 32; 30a, 32a), two sensors (12, 14; 12a, 14a) in each case form a sensor pair and the extensions (30, 32; 30a, 32a) carrying these form an extension pair, and
- wherein in each extension pair, either each extension (30, 32; 30a, 32a) points in a different direction starting from the flange-type, ring-shaped carrier part (24), wherein the two directions are essentially antiparallel to one another, or, in the case of extensions (30, 32; 30a, 32a) pointing in the same direction, the extensions (30, 32; 30a, 32a) are of different lengths, wherein the two directions are essentially parallel to one another.

4. Flow meter (20) according to one of the preceding claims, wherein the extensions (30, 32; 30a, 32a) are integrally connected to the flange-type, ring-shaped carrier part (24).

5. Flow meter (20) according to one of the preceding claims, wherein each sensor (12, 14; 12a, 14a) is embedded into the material of the extension (30, 32; 30a, 32a) at the end of the respective extension (30, 32; 30a, 32a).

6. Flow meter (20) according to one of the preceding claims, having ultrasonic sensors (12, 14; 12a, 14a) at the end of the extensions (30, 32; 30a, 32a).

## Revendications

1. Débitmètre (20) comportant une partie porteuse en collerette annulaire (24) et avec au moins deux capteurs (12, 14 ; 12a, 14a) disposés distants l'un de l'autre, le débitmètre (20) pouvant être disposé entre deux segments de tuyauterie (26, 28) d'une conduite (10) grâce à la partie porteuse en collerette annulaire (24), dans lequel la partie porteuse en collerette annulaire (24) est destinée à être montée sur une surface de bride d'une section de tuyauterie de la conduite (10),
- dans lequel les capteurs (12, 14 ; 12a, 14a) se trouvent respectivement à une extrémité libre d'une extension (30, 32 ; 30a, 32a) partant de la partie porteuse en collerette annulaire (24),
- les extensions (30, 32 ; 30a, 32a) étant orientées perpendiculairement ou au moins essentiellement perpendiculairement à un niveau défini par la partie porteuse en collerette annulaire (24), où la normale à la surface de ce niveau est parallèle à un axe de tuyauterie (A) d'un segment de tuyauterie (26, 28), et
- dans lequel respectivement deux capteurs (12, 14 ; 12a, 14a) définissent un parcours de signal (34, 34a) et le parcours de signal (34, 34a) comprend une composante (38) perpendiculaire au niveau défini par la partie porteuse en collerette annulaire (24).

2. Débitmètre (20) selon la revendication 1,
- dans lequel pour exactement deux capteurs (12, 14 ; 12a, 14a) et, correspondant à cela, pour deux extensions (30, 32 ; 30a, 32a), chaque extension (30, 32 ; 30a, 32a) partant de la partie porteuse en collerette annulaire (24) est orientée dans une direction différente, les deux directions étant essentiellement antiparallèles l'une par rapport à l'autre, ou
- dans lequel pour deux extensions (30, 32 ; 30a, 32a) orientées dans la même direction partant de la partie porteuse en collerette annulaire (24), les extensions (30, 32 ; 30a, 32a) ont des longueurs différentes, les deux directions étant essentiellement parallèles l'une par rapport à l'autre.

3. Débitmètre (20) selon la revendication 1,
- dans lequel pour exactement quatre capteurs (12, 14 ; 12a, 14a) et, correspondant à cela, pour quatre extensions (30, 32 ; 30a, 32a), respectivement deux capteurs (12, 14 ; 12a, 14a) forment une paire de capteurs et les extensions qui les portent (30, 32 ; 30a, 32a) forment une paire d'extensions, et
- dans lequel dans chaque paire d'extensions, soit chaque extension (30, 32 ; 30a, 32a) partant de la partie porteuse en collerette annulaire (24) est orientée dans une direction différente, les deux directions étant essentiellement antiparallèles l'une par rapport à l'autre, soit pour deux extensions (30, 32 ; 30a, 32a) orientées dans la même direction, les extensions (30, 32 ; 30a, 32a) ont des longueurs différentes, les deux directions étant essentiellement parallèles l'une à l'autre.

4. Débitmètre (20) selon l'une des revendications précédentes, dans lequel les extensions (30, 32 ; 30a, 32a) sont liées d'un seul bloc à la partie porteuse en collerette annulaire (24) .

5. Débitmètre (20) selon l'une des revendications précédentes, dans lequel chaque capteur (12, 14 ; 12a, 14a) à l'extrémité de l'extension correspondante (30, 32 ; 30a, 32a) est incorporé dans le matériau de l'extension (30, 32 ; 30a, 32a) .

6. Débitmètre (20) selon l'une des revendications précédentes, avec des capteurs à ultrasons (12, 14 ; 12a, 14a) à l'extrémité des extensions (30, 32 ; 30a, 32a).
